# EUROPÄISCHE PATENTANMELDUNG

(11) **EP 4 521 600 A1**
(43) Veröffentlichungstag der Anmeldung: **12.03.2025**
(21) Anmeldenummer: 24197123.3
(22) Anmeldetag: 29.08.2024
(51) Int. Cl.: H02J 50/10, H02J 50/12, H02J 50/60, H02J 50/80

(54) **VERFAHREN ZUM BETREIBEN EINES INDUKTIVEN KOPPLERS**

(30) Priorität: 01.09.2023 DE 102023123588
(71) Anmelder: Turck Holding GmbH, 58553 Halver (DE)
(72) Erfinder: Göbel, Lutz, 09387 Jahnsdorf (DE); Gerz, Tobias, 08340 Schwarzenberg (DE)
(74) Vertreter: DTS Patent- und Rechtsanwälte PartmbB

(57) **Zusammenfassung**

Die vorliegende Erfindung betrifft ein Verfahren zum Betreiben eines Primärgeräts (100) zur induktiven Leistungsübertragung, wobei für das Primärgerät (100) zumindest ein erster Betriebsmodus und ein zweiter Betriebsmodus aktivierbar ist; wobei, wenn der erste Betriebsmodus aktiviert ist, ein Primärschwingkreis (104) des Primärgeräts (100) so angeregt wird, dass eine Sekundärleistung an einen Sekundärschwingkreis (204) eines mit dem Primärgerät (100) gekoppelten Sekundärgeräts (200) übertragbar ist; und wobei, wenn der zweite Betriebsmodus aktiviert ist, der Primärschwingkreis (104) mit einer Standby-Leistung angeregt und ein Standby-Betriebsparameter erfasst wird; wobei anhand des erfassten Standby-Betriebsparameters ein Zielobjekt (300) in einem Erfassungsraum detektiert und ein Ausgabesignal erzeugt wird. Die Erfindung betrifft zudem ein Primärgerät (100).

## Beschreibung

Die vorliegende Erfindung betrifft ein Verfahren zum Betreiben eines induktiven Kopplers sowie ein System.

Es sind Systeme bekannt, bei denen über ein elektromagnetisches Feld eine induktive Leistungsübertragung zwischen einem Primärgerät (Sender) und einem Sekundärgerät (Empfänger) erfolgt. Dabei ist das Primärgerät insbesondere der aktive Part, der mit einer externen Leistungsversorgung gekoppelt ist und induktiv Leistung zu dem Sekundärgerät als passivem Part übertragen kann.

Um eine optimale Leistungsübertragung zu gewährleisten, müssen bestimmte Randbedingungen der Anordnung der Primär- und Sekundärgeräte zueinander erfüllt sein. Aus der EP 2 216 870 A2 ist eine Vorrichtung zum kontaktlosen Übertragen elektrischer Leistung bekannt. Dabei wird bestimmt, ob sich die Spulen der Primär- und Sekundärseite in einem geeigneten Abstand zueinander befinden, um eine effiziente Leistungsübertragung zu erlauben.

Ferner soll sichergestellt werden, dass sich keine Fremdobjekte in der Reichweite der Koppleranordnung befinden, an die unbeabsichtigt Energie abfließt und die sich gegebenenfalls gefährlich aufheizen können. Um diese Problematik zu umgehen, wurde eine Reihe verschiedener Verfahren vorgeschlagen, bei denen das Fremdobjekt typischerweise während einer Leistungsübertragung innerhalb der Koppleranordnung detektiert wird.

Es ist die Aufgabe der vorliegenden Erfindung, die bekannten Verfahren und Systeme so zu verbessern, dass Fremdobjekte effizient erkannt und die Koppler vielseitig genutzt werden können.

Diese Aufgabe wird erfindungsgemäß gelöst durch ein Verfahren mit den Merkmalen des unabhängigen Verfahrensanspruchs sowie ein Primärgerät mit den Merkmalen des unabhängigen Vorrichtungsanspruchs. Vorteilhafte Ausgestaltungen sind in den Unteransprüchen angegeben.

Danach wird die Aufgabe gelöst durch ein Verfahren zum Betreiben eines Primärgeräts zur induktiven Leistungsübertragung, wobei für das Primärgerät zumindest ein erster Betriebsmodus und ein zweiter Betriebsmodus aktivierbar ist. Dabei wird, wenn der erste Betriebsmodus aktiviert ist, ein Primärschwingkreis des Primärgeräts so angeregt, dass eine Sekundärleistung an einen Sekundärschwingkreis eines mit dem Primärgerät gekoppelten Sekundärgeräts übertragbar ist. Ferner wird, wenn der zweite Betriebsmodus aktiviert ist, der Primärschwingkreis mit einer Standby-Leistung angeregt und ein Standby-Betriebsparameter erfasst. Dabei wird anhand des erfassten Standby-Betriebsparameters ein Zielobjekt, insbesondere ein metallisches Zielobjekt, in einem Erfassungsraum detektiert und ein Ausgabesignal erzeugt.

Insbesondere kann also im zweiten Betriebsmodus, insbesondere in einem Standby-Modus, ein metallischer Gegenstand im elektromagnetischen Feld des Primärgeräts erkannt werden. Insbesondere wird der Primärschwingkreis im zweiten Betriebsmodus mit einer geringen Spannung und einer festgelegten Frequenz angeregt. Dadurch wird ein elektromagnetisches Feld erzeugt und es kann, falls ein Sekundärgerät detektiert wird, im Weiteren der erste Betriebsmodus aktiviert und eine induktive Leistungsübertragung ausgeführt werden.

Das Verfahren erweitert die Nutzungsmöglichkeiten des induktiven Kopplers, indem die Primärseite als Sensor, beispielsweise als Endlagenschalter, benutzt werden kann, auch während keine Energieübertragung zu einem Sekundärgerät stattfindet.

Im zweiten Betriebsmodus, insbesondere in einem Standby-Zustand, kann das Primärgerät damit als Näherungsschalter genutzt werden, insbesondere wenn es nicht mit einem Sekundärgerät gekoppelt ist.; Bei einer besonderen Ausbildung des Verfahrens kann vorgesehen sein, dass das Primärgerät im zweiten Betriebsmodus nicht mit einem Sekundärgerät koppelbar ist; üblicherweise wird jedoch das Primärgerät eine Kopplung mit einem Sekundärgerät durchführen, sobald im Standby-Modus ein kopplungsbereites Sekundärgerät erkannt wird.

Der Begriff "Standby" wird dabei als Zustand verstanden, bei dem das Primärgerät zu einem Zeitpunkt nicht mit einem Sekundärgerät zur induktiven Leistungsübertragung gekoppelt ist.

Die Primärfrequenz, mit welcher der Primärschwingkreis im zweiten Betriebsmodus angeregt wird, kann so eingestellt werden, dass eine bestimmte Standby-Leistung des Primärschwingkreises erhalten wird. Wenn sich ein metallisches Objekt in der Reichweite des elektromagnetischen Feldes des Primärschwingkreises befindet, dann nimmt dieses eine elektrische Leistung des elektromagnetischen Feldes auf und verändert somit die Impedanz des Gesamtsystems aus Primärschwingkreis und Zielobjekt. Diese Veränderung ist beispielsweise dadurch detektierbar, dass sich bei vorgegebener Primärfrequenz ein höherer Primärstrom zum Anregen des Primärschwingkreises einstellt.

Der erhöhte Primärstrom erlaubt daher qualitativ Rückschlüsse auf die Anwesenheit des Zielobjekts innerhalb der Reichweite des elektromagnetischen Feldes des Primärschwingkreises. Er erlaubt ferner quantitativ eine Auswertung, in welchem Abstand und/oder in welcher Lage relativ zum Primärschwingkreis das Zielobjekt angeordnet ist.

Es kann vorgesehen sein, dass das Primärgerät zwischen dem ersten und zweiten Betriebsmodus umschaltet, je nachdem, ob ein Sekundärgerät erkannt und gekoppelt wird, um eine induktive Leistungsübertragung im ersten Betriebsmodus durchzuführen, oder ob kein Sekundärgerät gekoppelt ist und im Standby des Primärgeräts ein Zielobjekt, insbesondere ein metallisches Fremdobjekt, detektiert wird.

Bei einer Ausbildung wird der erste Betriebsmodus aktiviert, wenn das Primärgerät mit dem Sekundärgerät gekoppelt wird, insbesondere wenn eine Datenverbindung zu dem Sekundärgerät hergestellt wird, um eine induktive Leistungsübertragung zu initiieren.

Der erste Betriebsmodus kann zum Beispiel anhand einer Nutzereingabe aktiviert werden oder automatisch, wenn ein Sekundärgerät mit dem Primärgerät gekoppelt wird, insbesondere wenn das Primärgerät mit dem Sekundärgerät zur induktiven Leistungsübertragung und insbesondere zur Datenübertragung gekoppelt wird. Sofern zu diesem Zeitpunkt der zweite Betriebsmodus aktiviert ist, ist insbesondere vorgesehen, dass dieser deaktiviert wird. Insbesondere können somit der erste und zweite Betriebsmodus nicht gleichzeitig aktiviert sein.

Bei einer Ausbildung wird eine Nutzereingabe erfasst und in Abhängigkeit von der Nutzereingabe wird der erste oder zweite Betriebsmodus aktiviert. Dabei wird insbesondere, wenn der zweite Betriebsmodus aktiviert ist, die Standby-Leistung des Primärschwingkreises in Abhängigkeit von der Nutzereingabe bestimmt.

Die Doppelnutzung des Primärgeräts ist daher insbesondere durch den Anwender mittels einer Nutzereingabe einstellbar. Alternativ oder zusätzlich ist das Primärgerät in der Lage, automatisch auszuwerten, ob bei einer vorhandenen und gekoppelten Sekundärseite die Funktion der induktiven Leistungsübertragung im ersten Betriebsmodus aktiviert werden soll, oder ob die Funktion der Metallerkennung im zweiten Betriebsmodus aktiviert werden soll.

Für den Fall, dass der Anwender festlegt, die Primärseite zur Metallerkennung zu verwenden, kann im zweiten Betriebsmodus die Standby-Leistung, das heißt insbesondere die Spannung zur Erzeugung des elektromagnetischen Feldes, über einen geringeren Basiswert erhöht und/oder die Frequenz des Primärschwingkreises variiert werden. Auf diese Weise kann eine höhere Reichweite und exaktere Metalldetektion ermöglicht werden.

Für den Fall, dass die Primärseite automatisch zwischen dem ersten und zweiten Betriebsmodus umschaltet, kann die Reichweite zunächst geringer ausgebildet sein, aber sie kann bei erfolgter Metalldetektion automatisch durch den gleichen Ablauf wie bei der vorstehend erläuterten Anwendereinstellung erweitert werden.

Bei einer weiteren Ausbildung wird, wenn der erste Betriebsmodus aktiviert ist, ein Sekundär-Leistungsparameter des Sekundärgeräts erfasst und eine Primärfrequenz, mit welcher der Primärschwingkreis angeregt wird, wird so geregelt, dass ein vorgegebener Wert des Sekundär-Leistungsparameters erhalten wird.

Dabei wird insbesondere ein Standby-Betriebsparameter erfasst, etwa eine Primärstromstärke (I_pri), die vom Zwischenkondensator in einen Verstärker und den Primärschwingkreis fließt, oder ein Eingangsstrom des Primärgeräts (I_in).

Bei einer Weiterbildung wird, wenn der zweite Betriebsmodus aktiviert ist, der Primärschwingkreis mit einer vorgegebenen Primärfrequenz angeregt. Dabei umfasst insbesondere der erfasste und ausgewertete Standby-Betriebsparameter eine Primärstromstärke (I_pri) oder einen Eingangsstrom des Primärgeräts (I_in).

Insbesondere kann als Standby-Betriebsparameter des Primärgeräts ein Leistungsparameter des Primärgeräts verwendet werden, etwa eine Primärstromstärke (I_pri), die von einem Zwischenkondensator in einen Verstärker und den Primärschwingkreis fließt, oder ein Eingangsstrom des Primärgeräts (I_in); ferner kann als Standby-Betriebsparameter eine Primärfrequenz des Primärschwingkreises verwendet werden.

Bei einer Ausbildung wird das Zielobjekt in dem Erfassungsraum detektiert, indem der Leistungsparameter mit einem vorgegebenen Schwellenwert verglichen wird. Dabei wird optional der Leistungsparameter anhand von Kalibrationsdaten oder einer Kennlinie bestimmt.

Bei einer weiteren Ausbildung wird beim Detektieren des Zielobjekts in dem Erfassungsraum ein Abstand des Zielobjekts von dem Primärgerät beziehungsweise ein Abstand des Zielobjekts von und/oder eine Lage relativ zu dem Primärschwingkreis bestimmt.

Zum Beispiel kann ein Abstand anhand einer Kennlinie bestimmt werden und/oder anhand einer Mehrzahl von Schwellenwerten, die jeweils bestimmten Abständen zugeordnet sind, wobei das Unter- oder Überschreiten eines der bestimmten Abstände durch einen Vergleich mit dem jeweils zugeordneten Schwellenwert erfasst wird.

Bei einer Weiterbildung umfasst das Ausgabesignal ein Schaltsignal und/oder ein Warnsignal. Zum Beispiel kann ein Signal zum An- oder Ausschalten einer Einrichtung erzeugt und ausgegeben werden, wenn der Abstand des Zielobjekts einen bestimmten Wert unterschreitet. Ferner kann ein Signal erzeugt werden, welches ein Koppeln und/oder eine induktive Leistungsübertragung verhindert, wenn ein Fremdobjekt in Reichweite des Primärgeräts erkannt wird. Ferner kann ein Signal erzeugt werden, anhand dessen versucht wird, ein Koppeln mit einem erkannten Sekundärgerät in der Nähe durchzuführen, wenn die Sekundär-Leistungsparameter bei erfolgter Datenübertragung eine Leistungsübertragung nicht ermöglichen.

Beim Koppeln des Primärgeräts und des Sekundärgeräts wird insbesondere eine datentechnische Verbindung hergestellt, insbesondere zugleich mit und gegebenenfalls parallel zu einer Verbindung zur induktiven Leistungsübertragung.

Das Primärgerät zur induktiven Leistungsübertragung umfasst einen Primärschwingkreis und eine Steuereinheit. Dabei ist das Primärgerät dazu eingerichtet, bei einem aktivierten ersten Betriebsmodus über den Primärschwingkreis eine Sekundärleistung an einen Sekundärschwingkreis eines mit dem Primärgerät gekoppelten Sekundärgeräts zu übertragen und bei einem aktivierten zweiten Betriebsmodus den Primärschwingkreis mit einer Standby-Leistung anzuregen. Dabei ist die Steuereinheit dazu eingerichtet, bei dem aktivierten zweiten Betriebsmodus einen Standby-Betriebsparameter des Primärgeräts zu erfassen und anhand des erfassten Standby-Betriebsparameters ein Zielobjekt in einem Erfassungsraum zu detektieren und ein Ausgabesignal zu erzeugen.

Die Steuereinheit, mittels derer zwischen dem ersten und zweiten Betriebsmodus umgeschaltet wird und/oder mittels derer das Ausgabesignal ausgewertet wird, kann von dem Primärgerät umfasst sein oder sie kann als externe Einheit vorgesehen sein, die insbesondere datentechnisch mit dem Primärgerät gekoppelt ist.

Das Primärgerät ist insbesondere dazu ausgebildet, das vorliegend beschriebene Verfahren auszuführen. Es weist daher die gleichen Vorteile auf wie das Verfahren und es kann analog zu den vorliegend beschriebenen Ausbildungen des Verfahrens weitergebildet werden.

Bei einer Ausbildung des Primärgeräts ist die Steuereinheit dazu eingerichtet, wenn der zweite Betriebsmodus aktiviert ist, eine Primärfrequenz, mit welcher der Primärschwingkreis angeregt wird, so zu regeln, dass eine vorgegebene Primärfrequenz erhalten wird, und einen Standby-Betriebsparameter zu erfassen, wobei der Standby-Betriebsparameter insbesondere eine Primärstromstärke (I_pri), die von einem Zwischenkreiskondensator in einen Verstärker und den Primärschwingkreis fließt, oder einen Eingangsstrom (I_in) des Primärgeräts umfasst.

Beim Betrieb des Primärgeräts als Näherungssensor im zweiten Betriebsmodus wird beispielsweise der Eingangsstrom in den Resonanzkreis der Primärseite (I_pri) erfasst und ausgewertet. Steigt der Strom I_pri über einen anwendungsabhängigen Schwellenwert, so gilt ein metallischer Gegenstand als detektiert.

Bei einer Weiterbildung umfasst das Primärgerät eine Schnittstelle zur Datenübertragung an eine externe Einheit, insbesondere eine Netzwerkschnittstelle, und die Steuereinheit ist dazu eingerichtet, das Ausgabesignal über die Schnittstelle an die externe Einheit zu übertragen.

Dadurch kann beispielsweise eine Information, ob sich ein metallischer Gegenstand im elektromagnetischen Feld des Primärgeräts befindet und/oder in welchem Abstand und/oder in welcher Lage relativ zum Primärgerät der Gegenstand angeordnet ist, an die externe Einheit ausgegeben werden.

Die Schnittstelle kann beispielsweise dazu eingerichtet sein, eine datentechnische Kommunikation zur Auswertung an eine übergeordnete Leitebene mittels IO-Link herzustellen. Insbesondere kann das Primärgerät dabei als eigenständiges IO-Link-Device ausgebildet sein.

Weitere Einzelheiten und Vorteile der Erfindung sollen nun anhand eines in den Zeichnungen dargestellten Ausführungsbeispiels näher erläutert werden.

Es zeigen:
- Fig. 1: ein Ausführungsbeispiel des Primärgeräts und ein zur induktiven Leistungsübertragung damit gekoppeltes Sekundärgerät;
- Fig. 2: das Ausführungsbeispiel des Primärgeräts und ein detektiertes Zielobjekt;
- Fig. 3: ein Ausführungsbeispiel des Verfahrens; und
- Fig. 4 und 5: beispielhafte Messergebnisse beim Betrieb des Primärgeräts.

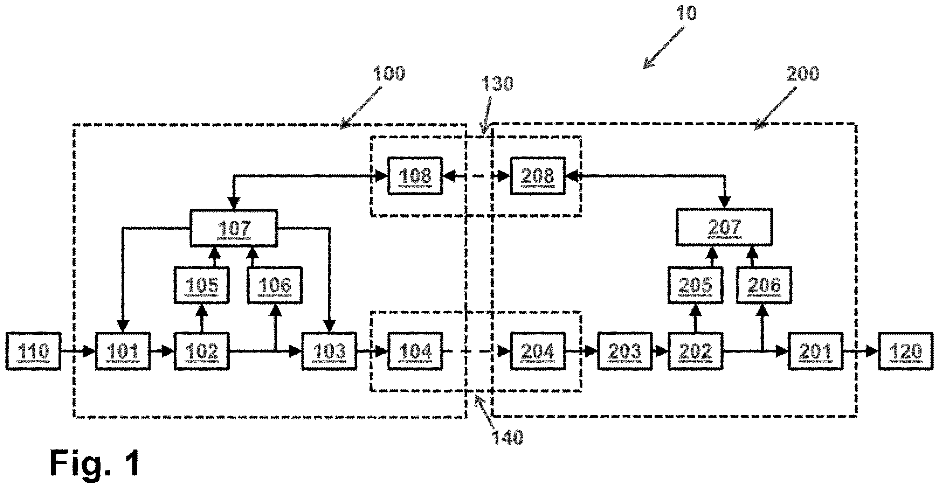

Mit Bezug zu Fig. 1 wird ein System 10 zur induktiven Leistungsübertragung mit einem Ausführungsbeispiel des Primärgeräts erläutert.

Das System 10 umfasst ein Primärgerät 100, hier einen Sender 100, und ein Sekundärgerät 200, hier einen Empfänger 200.

Das System 10 umfasst das Primärgerät 100 sowie das Sekundärgerät 200.

Bei dem in Fig. 1 gezeigten Zustand sind das Primärgerät 100 und das Sekundärgerät 200 gekoppelt und es wird eine kontaktlose Leistungsübertragung ausgeführt.

Dabei ist ein erster Betriebsmodus des Primärgeräts 100 aktiviert.

In diesem ersten Betriebsmodus wird ein Primärschwingkreis des Primärgeräts so angeregt, dass eine Sekundärleistung an einen Sekundärschwingkreis eines mit dem Primärgerät 100 gekoppelten Sekundärgeräts 200 übertragbar ist.

Bei dem Ausführungsbeispiel umfasst das Primärgerät 100 eine in einem (Primär- )Schwingkreis befindliche Einzelspule 104 zur induktiven Energieübertragung zwischen dem gekoppelten Primär- 100 und Sekundärgerät 200, wobei das Primärgerät 100 die Rolle des Senders 100 einnimmt.

Ein Eingang 110 auf der Primärseite versorgt das Primärgerät 100 mit elektrischer Leistung und das Sekundärgerät 200 gibt über einen Ausgang 120 elektrische Leistung auf der Sekundärseite ab.

Das Primärgerät 100 umfasst ferner eine Ansteuereinheit 107 zur Anpassung der last- und abstandsabhängigen Schwingkreisfrequenz sowie einen Spannungswandler 101 mit konstanter Ausgangsspannung und einen Spannungszwischenkreis 102 zur Anpassung der Eingangsspannung an die Schwingkreisspannung.

Das Primärgerät 100 umfasst ferner einen Verstärker 103, insbesondere einen "Current-Mode Amplifier", zur Anpassung der Steuersignale der Ansteuereinheit 107 an den Schwingkreis mit der Einzelspule 104 sowie eine Strommesseinheit 106 zwischen dem Spannungszwischenkreis 102 und einem Verstärker 103.

Das Primärgerät 100 umfasst ferner eine Spannungsmesseinheit 105 am Spannungszwischenkreis 102 und eine Auswerte- und Ansteuereinheit 107 zur Ansteuerung des Spannungswandlers 101 und des Verstärkers 103.

Das Primärgerät 100 umfasst ferner eine Schnittstelle zur Datenübertragung 108 zwischen einem gekoppelten Primärgerät 100 und Sekundärgerät 200, wobei insbesondere ein IO-Link-Verfahren genutzt werden kann, um eine datentechnische Verbindung mit dem Sekundärgerät 200 zu betreiben.

Das Sekundärgerät 200 umfasst ebenfalls eine in einem (Sekundär-)Schwingkreis befindliche Einzelspule 204 zur induktiven Energieübertragung zwischen dem gekoppelten Primärgerät 100 und dem Sekundärgerät 200, wobei das Sekundärgerät 200 die Rolle des Empfängers 200 einnimmt.

Das Sekundärgerät 200 umfasst ferner einen Gleichrichter 203 mit einem Spannungszwischenkreis 202 zur Speicherung der empfangenen Energie.

Das Sekundärgerät 200 umfasst zudem einen Spannungswandler 201 zur Anpassung der Zwischenkreisspannung an die Ausgangsspannung sowie eine Strommesseinheit 206 zwischen dem Spannungszwischenkreis 202 und dem Spannungswandler 201.

Das Sekundärgerät 200 umfasst ferner eine Spannungsmesseinheit 205 am Spannungszwischenkreis 202 und eine Schnittstelle zur Datenübertragung 208 zwischen dem Sekundärgerät 200 und dem damit datentechnisch gekoppelten Primärgerät 100.

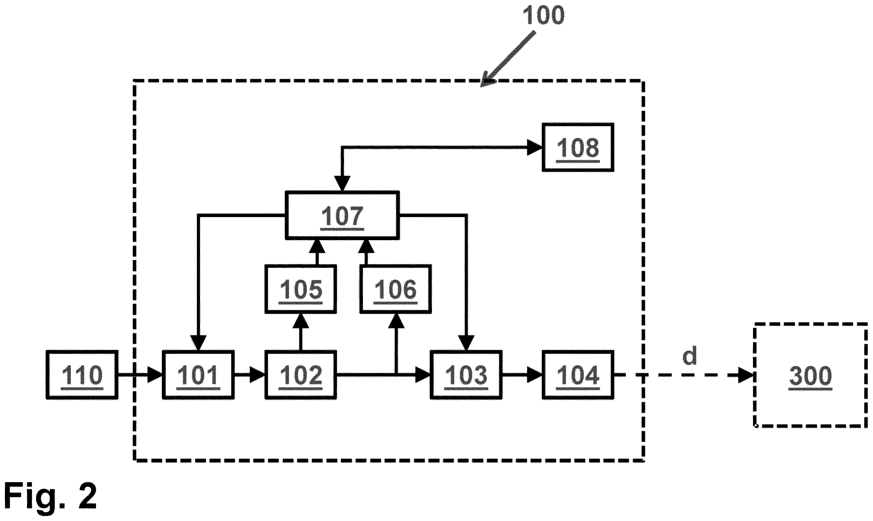

Mit Bezug zu Fig. 2 wird das Ausführungsbeispiel des Primärgeräts 100 mit einem detektierten Zielobjekt erläutert. Dabei wird von den obigen Erläuterungen mit Bezug zu Fig. 1 ausgegangen und ähnliche oder gleiche Elemente werden nicht erneut im Detail beschrieben.

Das Primärgerät 100 ist bei dem hier gezeigten Fall so aufgebaut wie mit Bezug zu Fig. 1 erläutert, es ist allerdings nicht mit einem Sekundärgerät 200 gekoppelt und es findet keine induktive Leistungsübertragung statt.

Es ist ein zweiter Betriebsmodus des Primärgeräts 100 aktiviert, der hier ein Standby-Modus ist.

Mit dem aktivierten zweiten Betriebsmodus wird der Primärschwingkreis mit der Einzelspule 104 mit einer Standby-Leistung versorgt und es wird ein Standby-Betriebsparameter erfasst, anhand dessen ein Zielobjekt 300 in einem Erfassungsraum detektiert und ein Ausgabesignal erzeugt wird.

Das Zielobjekt 300, das hier ein "Fremdobjekt" 300 ist, ist ein metallischer Körper, der in einem Abstand d von der Einzelspule 104 des Primärschwingkreises angeordnet ist.

Insbesondere ist bei dem Ausführungsbeispiel ein "Erfassungsraum" anhand eines maximalen Abstands definiert, in dem ein Zielobjekt 300 detektierbar ist, insbesondere eine Reichweite eines vom Primärgerät 100 erzeugten elektromagnetischen Feldes.

Die Standby-Leistung, mit welcher der Primärschwingkreis gespeist wird, ist bei diesem Ausführungsbeispiel deutlich niedriger als eine typische Leistung, die bei der induktiven Leistungsübertragung verwendet wird. Beispielsweise kann die Versorgung mit einer Standby-Leistung von bis zu 5 W, bevorzugt bis zu 2 W, erfolgen.

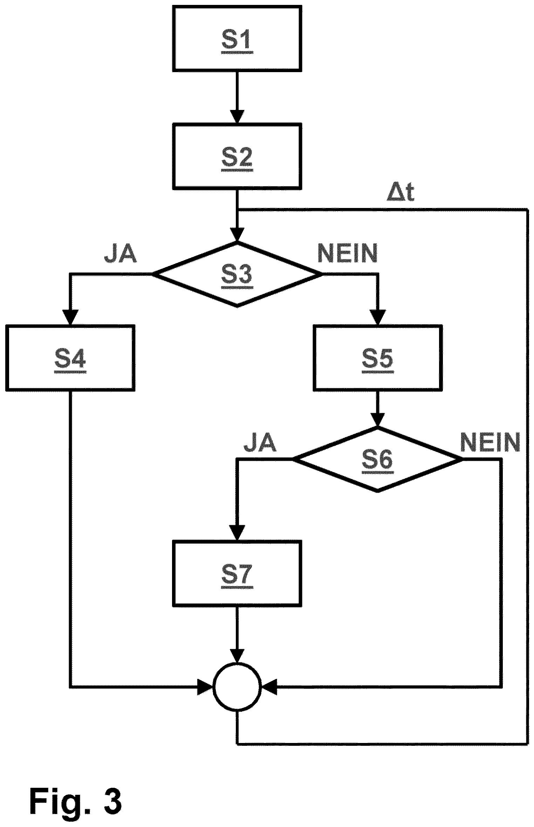

Mit Bezug zu Fig. 3 wird ein Ausführungsbeispiel des Verfahrens beschrieben. Dabei wird insbesondere von dem oben beschriebenen Ausführungsbeispiel eines Primärgeräts 100 ausgegangen.

In einem Schritt S1 beginnt das Verfahren, insbesondere mit einer Start-Routine, die beispielsweise ein Initialisieren des Primärgeräts 100 umfasst. Zur Initialisierung kann eine Datenverbindung zu einem Netzwerk verwendet werden, über welche das Primärgerät 100 etwa mit einer Steuerung verbunden ist.

Die Start-Routine des ersten Schritts S1 umfasst bei dem Beispiel eine Parametrierung des Primärgeräts. Dabei wird unter anderem zum Aktivieren des zweiten Betriebsmodus eine Funktion als Abstandssensor oder Näherungsschalter aktiviert, es wird eine Zwischenkreisspannung U_{ZK} während des Standby-Betriebs eingestellt.

Als Zwischenkreisspannung U_{ZK} kann zum Beispiel ein Wert von 5 V oder 18 V eingestellt werden, wobei bei 5 V ein kleinerer Erfassungsraum ermöglicht wird, während dieser bei 18 V vergrößert ist.

In einem Schritt S2 wird das Primärgerät 100 in einem Standby-Modus betrieben, der bei dem Ausführungsbeispiel dem zweiten Betriebsmodus entspricht. Das Primärgerät ist in diesem Zustand initialisiert und bereit zur Detektion einer vorhandenen Sekundärseite oder eines metallischen Gegenstands beziehungsweise eines Zielobjekts 300.

Bei einer begrenzten Reichweite, wie sie zum Beispiel mit 5 V Zwischenkreisspannung U_{ZK} erhalten wird, kann etwa ein maximaler Abstand dₘₐₓ zur Detektion eines Sekundärgeräts oder eines metallischen Gegenstandes bei ungefähr bis zu 7 mm liegen. Die Standby-Leistung beim Betrieb liegt in diesem Fall bei ungefähr P ≈ 1,0 W.

Bei einer erweiterten Reichweite, wie sie zum Beispiel mit 18 V Zwischenkreisspannung U_{ZK} erhalten wird, kann etwa ein maximaler Abstand dₘₐₓ zur Detektion eines Sekundärgeräts oder eines metallischen Gegenstandes bei ungefähr bis zu 18 mm liegen. Die Standby-Leistung beim Betrieb liegt in diesem Fall bei ungefähr P ≈ 2,5 W.

In einem weiteren Schritt S3 wird überprüft, ob ein Sekundärgerät 200 innerhalb der Reichweite des elektromagnetischen Feldes der Primärseite 100 detektiert wird.

Wie oben erläutert, kann diese Detektion zum Beispiel bei 5 V Zwischenkreisspannung U_{ZK} bis zu einem maximalen Abstand dₘₐₓ von ungefähr bis zu 7 mm erfolgen. In einer erweiterten Variante mit zum Beispiel 18 V Zwischenkreisspannung U_{ZK} kann etwa der maximaler Abstand dₘₐₓ zur Detektion eines Sekundärgeräts bei ungefähr bis zu 18 mm liegen.

In einem weiteren Schritt S4 wird, wenn ein Sekundärgerät 200 detektiert wurde, der erste Betriebsmodus für das Primärgerät 100 aktiviert und dieses wird zur induktiven Leistungsübertragung mit dem Sekundärgerät 200 gekoppelt. Hierzu wird eine datentechnische Verbindung hergestellt. Ferner wird eine kontaktlose, induktive Leistungsübertragung über ein vom Primärgerät 100 erzeugtes und vom Sekundärgerät 200 aufgenommenes elektromagnetisches Feld durchgeführt.

Bei der oben beschriebenen begrenzten Reichweite kann zum Beispiel ein maximaler Abstand für die Energieübertragung bei dₘₐₓ <= 7 mm liegen, bei der oben beschriebenen erweiterten Reichweite kann zum Beispiel ein maximaler Abstand zur Erfassung eines metallischen Objektes bei dₘₐₓ > 7 mm liegen.

In einem weiteren Schritt S5 wird, wenn kein Sekundärgerät 200 vorhanden und/oder mit dem Primärgerät 100 gekoppelt ist, der zweite Betriebsmodus für das Primärgerät 100 aktiviert. Das Primärgerät 100 wird dann als Abstandssensor oder Näherungsschalter verwendet, der die Anwesenheit eines Zielobjekts 300 in dem Erfassungsraum detektiert, wobei ferner der Abstand d bestimmt wird.

Bei dem Ausführungsbeispiel ist vorgesehen, dass bei Ausführung des Schritts S5 zunächst geprüft wird, ob die erweiterte Funktionalität des Primärgeräts so eingestellt ist, dass bei fehlender Sekundärseite das Primärgerät als Abstandssensor beziehungsweise Näherungsschalter oder als Detektor für ein Zielobjekt 300 betrieben werden soll. Ist dies nicht eingestellt, so wird insbesondere ein dritter Betriebsmodus aktiviert, bei dem im Standby keine Detektion stattfindet.

Bei dem aktivierten zweiten Betriebsmodus wird in einer Schleife mit einem festen Zeitintervall, bei dem Beispiel alle 10 ms, regelmäßig geprüft, ob ein Sekundärgerät gekoppelt wird und somit gegebenenfalls in den ersten Betriebsmodus für die induktive Leistungsübertragung umgeschaltet werden soll.

Solange keine Sekundärseite detektiert wird, wird bei aktiviertem zweiten Betriebsmodus in einem Schritt S6 eine Detektion eines metallischen Zielobjekts 300 ausgeführt. Dafür wird geprüft, ob sich ein metallischer Gegenstand im elektromagnetischen Feld des Primärgeräts befindet.

Zum Detektieren eines Zielobjekts 300 wird im zweiten Betriebsmodus der Primärschwingkreis des Primärgeräts 100 mit einer festen Zwischenkreisspannung U_{ZK} betrieben. Bei gegebener fester Primärfrequenz und Zwischenkreisspannung wird ein Primärstrom Iₚᵣᵢ und/oder ein Eingangsstrom Iᵢₙ des Primärgeräts 100 erfasst und ausgewertet. Der Primärstrom Iₚᵣᵢ beziehungsweise der Eingangsstrom Iᵢₙ ändert sich aufgrund einer Impedanzänderung des Primärschwingkreises bei vorhandenem metallischem Objekt. Der gemessene Primärstrom Iₚᵣᵢ beziehungsweise Eingangsstrom Iᵢₙ des Primärgeräts 100 wird dann ausgewertet.

Übersteigt der Primärstrom Iₚᵣᵢ beziehungsweise der Eingangsstrom Iᵢₙ einen bestimmten Schwellenwert, so kann davon ausgegangen werden, dass sich ein metallisches Zielobjekt 300 im Erfassungsraum beziehungsweise innerhalb der Reichweite des Primärgeräts 100 befindet. Die Größe des Erfassungsraums beziehungsweise die Reichweite hängt dabei insbesondere von der Höhe der Zwischenkreisspannung U_{ZK} ab, da bei höherer Zwischenkreisspannung U_{ZK} der Primärschwingkreis mit höherer Standby-Leistung betrieben wird.

Alternativ oder zusätzlich zu einem Vergleich mit einem Schwellenwert kann anhand der Höhe des Primärstroms Iₚᵣᵢ oder des Eingangsstroms Iᵢₙ ein Abstand d des Zielobjekts 300 von dem Primärgerät 100 bestimmt werden. Üblicherweise ist der gemessene Wert der Stromstärke umso höher, je näher das Zielobjekt 300 an dem Primärgerät 100 angeordnet ist. Zur Auswertung wird der gemessene Wert insbesondere mittels Kalibrierwerten oder mittels einer Kalibrierkurve ausgewertet und der Abstand d wird bestimmt.

Bei dem oben beschriebenen Betrieb mit begrenzter Reichweite kann ein Zielobjekt 300 mit einem maximalen Abstand dₘₐₓ von zum Beispiel 7 mm detektiert werden. Bei dem Betrieb mit erweiterter Reichweite, insbesondere mit höherer Standby-Leistung, kann das Zielobjekt 300 mit einem maximalen Abstand dₘₐₓ von zum Beispiel 18 mm detektiert werden. Bei anderen Beispielen, insbesondere mit unterschiedlicher Zwischenkreisspannung U_{ZK}, können andere Reichweiten erhalten werden.

In einem Schritt S7 erfolgt dann eine Signalausgabe. Insbesondere wird dann ein Signal ausgegeben, wenn ein Zielobjekt 300 detektiert wurde; alternativ oder zusätzlich kann die Signalausgabe erfolgen, wenn kein Zielobjekt 300 detektiert wurde.

Es kommen verschiedene Ausgabekanäle für das Ausgangssignal infrage, je nachdem, welche Schnittstellen bei dem Primärgerät 100 vorgesehen sind und wie das Ausgangssignal weiter verarbeitet werden soll.

Das Ausgangssignal kann etwa über ein Netzwerk, etwa über IO-Link, ausgegeben und an eine andere Einreichung, etwa einen IO-Master, übertragen werden.

Ferner kann das Primärgerät 100 einen Schaltausgang aufweisen, der beispielsweise ein An- oder Ausschalten ausführt, wenn ein Zielobjekt 300 detektiert wird, beziehungsweise wenn der Abstand d des Zielobjekts 300 einen bestimmten Abstands-Schwellenwert über- oder unterschreitet.

Denkbar ist ferner eine Abschaltung der Zwischenkreisspannung U_{ZK} beziehungsweise der Ansteuerfrequenz des Primär-Resonanzkreises, wenn das Zielobjekt 300 detektiert wird. So kann eine unzulässige Erwärmung des metallischen Gegenstandes vermieden werden.

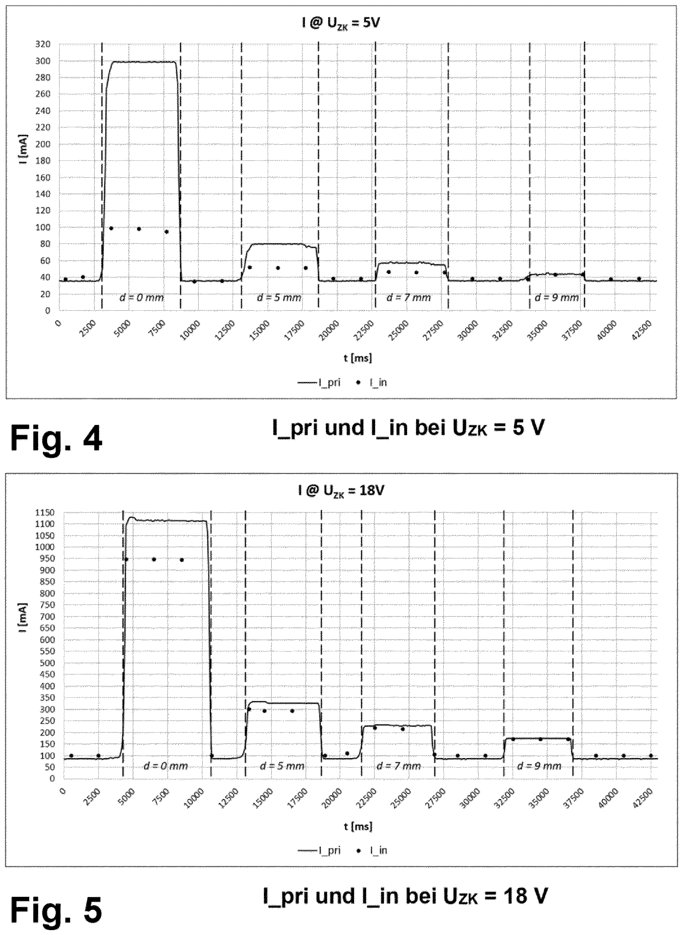

Mit Bezug zu den Fig. 4 und 5 werden beispielhafte Messergebnisse beim Betrieb des Primärgeräts erläutert. Dabei wird von den oben erläuterten Ausführungsbeispielen des Primärgeräts 100 und des Verfahrens ausgegangen.

Bei dem in Fig. 4 gezeigten Fall wird der Primärschwingkreis des Primärgeräts 100 mit einer Zwischenkreisspannung U_{ZK} von 5 V betrieben.

Bei dem in Fig. 5 gezeigten Fall wird der Primärschwingkreis des Primärgeräts 100 mit einer Zwischenkreisspannung U_{ZK} von 18 V betrieben.

Es sind beispielhafte Messergebnisse des internen Primärstroms I_pri und des Eingangsstroms I_in des Primärgeräts 100 bei einer Zwischenkreisspannung U_{ZK} von 5 V (Fig. 4) beziehungsweise 18 V (Fig. 5) während der Metalldetektion bei unterschiedlichen Abständen d dargestellt.

Insbesondere ist dabei der interne Primärstrom Iₚᵣᵢ eine Stromstärke, die beim Betrieb des Primärgeräts 100 für die Anregung des Primärschwingkreises erforderlich ist, um den Primärschwingkreis bei gegebener feste Primärfrequenz mit der erforderlichen elektrischen Leistung zu versorgen. Alternativ oder zusätzlich zu dem internen Primärstrom Iₚᵣᵢ kann der Eingangsstrom Iᵢₙ des Primärgeräts verwendet werden, nämlich insbesondere eine Stromstärke, mit der das Primärgerät 100 von außen mit elektrischer Leistung versorgt wird.

In den mit bestimmten Werten für den Abstand d gekennzeichneten Bereichen der Kurven war jeweils ein metallisches Zielobjekt 300 im Abstand d vom Primärgerät 100 angeordnet. Die Abstände d betrugen für die Messungen 0 mm, 5 mm, 7 mm und 9 mm.

Aus den Kurven der Fig. 4 und 5 ist ersichtlich, dass bei der höheren Zwischenkreisspannung U_{ZK} von 18 V die gemessenen Stromstärken auch bei größeren Abständen d deutlich über der Grundlinie liegen. Das heißt, auch bei Abständen d von beispielsweise 7 mm oder 9 mm kann das Zielobjekt 300 noch zuverlässig detektiert werden.

Ferner ist den Fig. 4 und 5 zu entnehmen, dass die gemessene Stromstärke von dem Abstand d abhängt, sodass aus der gemessenen Stromstärke auf den Abstand d geschlossen werden kann. Unter Verwendung von Daten, wie sie etwa in den Fig. 4 und 5 gezeigt sind, als Kalibrierdaten kann das Primärgerät im zweiten Betriebsmodus als Abstands- oder Näherungssensor genutzt werden, der einen Abstandswert ausgibt oder der bei Unterschreiten eines Schwellenwertes für den Abstand d ein Ausgabesignal ausgibt. Bei einer Kalibrierung kann ferner anhand der gemessenen Daten eine Kalibrierkurve mittels Fitten ermittelt werden, etwa durch Fitten eines Polynoms, wobei die Abhängigkeit der gemessenen Stromstärke vom Abstand d angegeben wird.

Die Erfindung erlaubt einen gegenüber bekannten Vorrichtungen erweiterten Funktionsumfang der Primärseite des induktiven Kopplers. Es kann eine erhöhte Sicherheit ermöglicht werden, zum Beispiel ein Schutz vor einer Kollision der Primärseite mit einem metallischen Gegenstand, indem Signale der Primärseite in einer übergeordneten Steuerung ausgewertet werden.

Ferner ist es möglich, metallische Ablagerungen beispielsweise auf einer Frontkappe eines Primär- oder Sekundärgerätes frühzeitig zu erkennen. Somit können Wartung und Reinigung des Kopplersystems gezielt durchgeführt werden und Verschleiß und Energiebedarf können verringert werden.

Es kann vermieden werden, dass sich Fremdobjekte im elektromagnetischen Feld der Primärseite während des zweiten Betriebsmodus, das heißt im Standby-Betrieb, aufheizen und eine Gefahr darstellen.

Das Verfahren und das Primärgerät der vorliegenden Beschreibung erlauben verschiedene Anwendungen der erweiterten Funktion des Primärgeräts als Abstandssensor beziehungsweise Näherungsschalter. Zum Beispiel kann eine Steuerungsoptimierung zur Positionierung von (metallischen) Werkzeugträgern erfolgen, wobei eine induktive Kopplung des Primärgeräts mit einer Sekundärseite erst anschließend an die Positionierung erfolgt. Es können verschiedene (metallische) Geräte gezählt werden, von denen nur eine Untermenge ein Sekundärgerät aufweist, welches zur Kopplung und zur induktiven Leistungsübertragung geeignet wäre. Ferner kann das Primärgerät im zweiten Betriebsmodus als Endlagenschalter zur Annäherung eines Zielobjekts genutzt werden; beim Erkennen eines hinreichend geringen Abstands zum Zielobjekt kann beispielsweise eine Bewegung abgeschaltet und gegebenenfalls eine induktive Energieübertragung begonnen werden. Ferner können Fremdkörper auf der Primärseite erkannt werden, etwa durch eine Verschmutzung im Bereich des Primärgeräts, beispielsweise einer Kappe des Primärgeräts, ohne dass dafür das Primärgerät mit einem Sekundärgerät gekoppelt sein muss. Ferner kann eine Einbausituation der Primärseite in einer umschlossenen Metallumgebung überprüft werden, auch bevor eine Sekundärseite installiert und gekoppelt ist.

### Bezugszeichenliste

- 10: System
- 100: Primärgerät; Sender
- 101: Spannungswandler
- 102: Spannungszwischenkreis; Primär-Zwischenkreis
- 103: Verstärker
- 104: Einzelspule; Primärschwingkreis mit Einzelspule und Resonanzkondensator
- 105: Spannungsmesseinheit
- 106: Strommesseinheit
- 107: Auswerte- und Ansteuereinheit
- 108: Primär-Schnittstelle; Schnittstelle (Datenübertragung)
- 110: Eingang
- 120: Ausgang
- 130: Datenübertragung
- 140: Leistungsübertragung
- 200: Sekundärgerät; Empfänger
- 201: Spannungswandler
- 202: Spannungszwischenkreis; Sekundär-Zwischenkreis mit Einzelspule und Resonanzkondensator
- 203: Gleichrichter
- 204: Einzelspule; Sekundärschwingkreis
- 205: Spannungsmesseinheit
- 206: Strommesseinheit
- 207: Auswertungs- und Ansteuereinheit
- 208: Sekundär-Schnittstelle; Schnittstelle (Datenübertragung)
- 300: Zielobjekt, Fremdobjekt (metallisch)
- d: Abstand
- dₘₐₓ: Maximalabstand zur Detektion
- S1, S2, S3, S4, S5, S6, S7: Schritt

## Patentansprüche

1. Verfahren zum Betreiben eines Primärgeräts (100) zur induktiven Leistungsübertragung, wobei
für das Primärgerät (100) zumindest ein erster Betriebsmodus und ein zweiter Betriebsmodus aktivierbar ist; wobei,
wenn der erste Betriebsmodus aktiviert ist, ein Primärschwingkreis (104) des Primärgeräts (100) so angeregt wird, dass eine Sekundärleistung an einen Sekundärschwingkreis (204) eines mit dem Primärgerät (100) gekoppelten Sekundärgeräts (200) übertragbar ist; und wobei,
wenn der zweite Betriebsmodus aktiviert ist, der Primärschwingkreis (104) mit einer Standby-Leistung angeregt und ein Standby-Betriebsparameter erfasst wird; wobei
anhand des erfassten Standby-Betriebsparameters ein Zielobjekt (300) in einem Erfassungsraum detektiert und ein Ausgabesignal erzeugt wird.

2. Verfahren gemäß Anspruch 1,
**dadurch gekennzeichnet, dass**
der erste Betriebsmodus aktiviert wird, wenn das Primärgerät (100) mit dem Sekundärgerät (200) gekoppelt wird, insbesondere wenn eine Datenverbindung zu dem Sekundärgerät (200) hergestellt wird, um eine induktive Leistungsübertragung zu initiieren.

3. Verfahren gemäß einem der vorhergehenden Ansprüche,
**dadurch gekennzeichnet, dass,**
eine Nutzereingabe erfasst wird und in Abhängigkeit von der Nutzereingabe der erste oder zweite Betriebsmodus aktiviert wird; wobei insbesondere, wenn der zweite Betriebsmodus aktiviert ist, die Standby-Leistung des Primärschwingkreises (104) in Abhängigkeit von der Nutzereingabe bestimmt wird.

4. Verfahren gemäß einem der vorhergehenden Ansprüche,
**dadurch gekennzeichnet, dass,**
wenn der erste Betriebsmodus aktiviert ist, ein Sekundär-Leistungsparameter des Sekundärgeräts (200) erfasst wird, insbesondere eine Primärstromstärke (I_pri) oder ein Eingangsstrom des Primärgeräts (I_in); und
eine Primärfrequenz, mit welcher der Primärschwingkreis angeregt wird, so geregelt wird, dass ein vorgegebener Wert des Sekundär-Leistungsparameters erhalten wird.

5. Verfahren gemäß einem der vorhergehenden Ansprüche,
**dadurch gekennzeichnet, dass,**
wenn der zweite Betriebsmodus aktiviert ist, der Primärschwingkreis (104) mit einer vorgegebenen Primärfrequenz angeregt wird; wobei insbesondere der Standby-Betriebsparameter eine Primärstromstärke (I_pri) oder einen Eingangsstrom (I_in) des Primärgeräts (100) umfasst.

6. Verfahren gemäß einem der vorhergehenden Ansprüche,
**dadurch gekennzeichnet, dass**
das Zielobjekt (300) in dem Erfassungsraum detektiert wird, indem der Leistungsparameter mit einem vorgegebenen Schwellenwert verglichen wird; wobei
optional der Leistungsparameter anhand von Kalibrationsdaten oder einer Kennlinie bestimmt wird.

7. Verfahren gemäß einem der vorhergehenden Ansprüche,
**dadurch gekennzeichnet, dass**
beim Detektieren des Zielobjekts (300) in dem Erfassungsraum ein Abstand (d) des Zielobjekts (300) von dem Primärgerät (100) bestimmt wird.

8. Verfahren gemäß einem der vorhergehenden Ansprüche,
**dadurch gekennzeichnet, dass**
das Ausgabesignal ein Schaltsignal und/oder ein Warnsignal umfasst.

9. Primärgerät (100) zur induktiven Leistungsübertragung, umfassend
einen Primärschwingkreis (104); und
eine Steuereinheit (107); wobei
das Primärgerät (100) dazu eingerichtet ist,
- bei einem aktivierten ersten Betriebsmodus über den Primärschwingkreis (104) eine Sekundärleistung an einen Sekundärschwingkreis (204) eines mit dem Primärgerät (100) gekoppelten Sekundärgeräts (200) zu übertragen; und
- bei einem aktivierten zweiten Betriebsmodus den Primärschwingkreis (104) mit einer Standby-Leistung anzuregen; wobei
die Steuereinheit (107) dazu eingerichtet ist, bei dem aktivierten zweiten Betriebsmodus einen Standby-Betriebsparameter des Primärgeräts (100) zu erfassen und anhand des erfassten Standby-Betriebsparameters ein Zielobjekt (300) in einem Erfassungsraum zu detektieren und ein Ausgabesignal zu erzeugen.

10. Primärgerät (100) gemäß dem vorhergehenden Vorrichtungsanspruch,
**dadurch gekennzeichnet, dass**
die Steuereinheit (107) dazu eingerichtet ist, wenn der zweite Betriebsmodus aktiviert ist, den Primärschwingkreis (104) mit einer vorgegebenen Primärfrequenz anzuregen; wobei insbesondere der Standby-Betriebsparameter eine Primärstromstärke (I_pri), die von einem Zwischenkondensator in einen Verstärker (103) und den Primärschwingkreis (104) fließt, oder einen Eingangsstrom (I_in) des Primärgeräts (100) umfasst; und/oder
das Primärgerät (100) eine Schnittstelle zur Datenübertragung an eine externe Einheit, insbesondere eine Netzwerkschnittstelle, umfasst; und die Steuereinheit (107) dazu eingerichtet ist, das Ausgabesignal über die Schnittstelle an die externe Einheit zu übertragen.
